# EUROPEAN PATENT SPECIFICATION

(11) **EP 1 497 009 B1**
(45) Date of publication and mention of the grant of the patent: **21.12.2005**
(21) Application number: 03724996.8
(22) Date of filing: 10.04.2003
(51) Int. Cl.: B01D 19/04, C11D 3/42, C11D 3/00

(54) **FOAM CONTROL AGENTS**
SCHAUMREGULIERUNGSMITTEL
AGENTS DE REGULATION DE MOUSSE

(30) Priority: 19.04.2002 EP 02405320
(43) Date of publication of application: 19.01.2005
(73) Proprietor: DOW CORNING S.A., 7180 Seneffe (BE)
(72) Inventor: KASCHIG, Jürgen, 79104 Freiburg (DE); MERKLE, Gerhard, 79102 Freiburg (DE); SCHULTZ, Bernard, F-68300 St. Louis (FR); L'HOSTIS, Jacqueline, B-7830 Hellbecq (BE); SIMON, Christel, Mariette, B., B-6540 Lobbes (BE); TEN CATE, Johannes, Gerhardus, B-3090 Overijse (BE); VAN ROY, Blondine, Donatienne, R., G., 1970 Wezembeek-Oppem (BE)
(86) International application number: PCT/EP2003/003727
(87) International publication number: WO 2003/089108

(56) References cited:
- EP-A- 0 636 684
- EP-A- 1 075 864
- WO-A-00/20546
- WO-A-94/05767
- DE-A- 4 310 672
- GB-A- 2 315 765
- US-A1- 2002 039 986

## Description

This invention relates to particulate foam control agents comprising a fluorescent whitening agent (FWA), more particularly those intended for incorporation in detergent compositions which are in powder form.

Optical brighteners, also known as fluorescent whitening agents, are commonly used in laundry detergents. Brighteners deposit onto fabrics where they absorb ultraviolet radiant energy and reemit it as a blue light. This reduces or eliminates any yellowish cast to fabrics and gives them a brighter appearance. It is often desirable to add the fluorescent whitening agents in post addition processes by dry blending with granules that contain all the FWA amount. However, undesirable brightener staining on fabrics can occur when the post added granules come in direct contact with wet cotton-containing fabrics.

It was now found that such staining can be reduced or eliminated while maintaining an acceptable level of fabric whitening, when a fluorescent whitening agent isincorporated into a particulate foam control agent.

Particulate foam control agents often contain a carrier material for the foam control agent to make the foam control agent into a more substantial solid particulate material and facilitate its handling. The particulate foam control agent can then be post-blended as a powder with the rest of the powder detergent composition. The foam control agents are based on silicone antifoams and are well known from the art and have been described in many patent specifications. Also, powder detergent compositions comprising silicone based foam control agents are well known. Foam control agents comprising an encapsulating or protective material are known from EP-A-0,636,684, US-6,165,968, EP-A-0,995,473 and EP-A-0,718,018. The foam control agents disclosed in these references comprise a silicone antifoam, a zeolite carrier for the antifoam, a surface active agent and a polycarboxylate-type binder or encapsulant.

According to the invention there is provided a particulate foam control agent comprising
(a) from 1 to 30 parts by weight of a silicone antifoam;
(b) from 45 to 99 parts by weight of a particulate carrier for the antifoam,
(c) from 2 to 50 parts by weight of a fluorescent whitening agent;
(d) from 1 to 40 parts by weight of a binder.

Preferably the particulate foam control agent also contains from 1 to 60% by weight of the silicone antifoam of a surface active agent (e).

### Component (a) - silicone antifoam

Silicone antifoams for use in the foam control agents of this invention are known materials and have been described in a number of patent specifications, including those referred to herein. Silicone antifoams are preferably foam regulating compositions comprising a liquid organopolysiloxane polymer and a filler particle the surface of which has been rendered hydrophobic.

Liquid organopolysiloxane polymers that are useful in silicone antifoams are also known and have been described in many patent specifications. Full description of all options is therefore not included but can be found in the many publications including patent application EP-A-578 424. Preferably they are linear or branched polymers having a structure according to the general formula 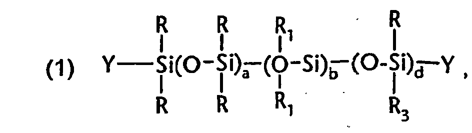 wherein
- R: denotes a monovalent hydrocarbon group having from 1 to 8 carbon atoms, preferably from 1 to 4 carbon atoms;
- R₁: denotes a group R; a hydroxyl group; or a group (1a) 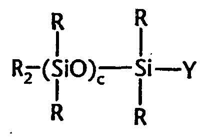 wherein
- R₂: denotes a divalent hydrocarbon, hydrocarbonoxy or siloxane group or oxygen;
- R₃: denotes a C₉-C₃₅alkyl group;
- Y: denotes a group R or a hydroxyl group;
- a, b, c and d: have a value of 0 or an integer, provided at least one of a and b is an integer, and the total of a+b+c+d has a value such that the viscosity of the organopolysiloxane polymer at 25°C is at least 50 mm²/s.

The organopolysiloxane polymers may be linear, in which case R₁ denotes R or a hydroxyl group. It is preferred for the linear organopolysilixanes that Y denotes a group R and that b=0.

More preferred are those linear polymers wherein d=0 and wherein at least 80% of all R groups denote an alkyl group having from 1 to 4 carbon atoms, most preferably methyl.

It is most preferred that the linear organo-polysiloxanes are trimethylsiloxane end-blocked polydimethylsiloxanes.

The preferred viscosity of the linear organopolysiloxanes is from 500 to 100,000 mm²/s, more preferably 1000 to 60,000 mm²/s at 25°C.

Organopolysiloxanes that are not linear are also known in the art. The preferred non-linear materials are those having branching in the siloxane chain. These polymers have a structure according to Formula (1), wherein b has a value of at least 1 and R₂ is preferably a divalent siloxane group or an oxygen atom.

Particularly preferred siloxane groups R₂ are small three dimensional siloxane resin particles that may have a number of pending siloxane polymer units.

Branched siloxanes are known and examples of them have been described, together with a method of making them, in a number of patent specifications, i.e. GB 639673, EP 31 532, EP 217 501, EP 273 448, DE 38 05 661 and GB 2 257 709.

Preferred liquid organopolysiloxanes are branched or higher viscosity siloxanes (e.g. having a viscosity above 12,500 mm²/s at 25°C), especially branched siloxanes, as they show an improved ability to control foam in most aqueous surfactant solutions.

Another type of silicone antifoams have been described in patent EP-A-1,075,864. It comprises (A) an organo-polysiloxane material having at least one silicone-bonded substituent of the formula X-Ph, wherein X denotes a divalent aliphatic hydrocarbon group and Ph denotes an optionally substituted aromatic group and (B) an organosilicon resin. The organosilicon resin (B) preferably consists of siloxane units of the formula R'ₐSiO_{4a/2} wherein R' denotes a hydroxyl, hydrocarbon or hydrocarbonoxy group, particularly trialkylsiloxy units and SiO_{4/2} units, wherein a has a value of from 0.5 to 2.4.

### Filler particles

Filler particles that are useful in the antifoams for use in foam control agents according to the present invention are also well known and have been described in many publications. They are finely divided particulate materials examples of which include silica, fumed TiO₂, Al₂O₃, zinc oxide, magnesium oxide, salts of alphatic carboxylic acids, reaction products of isocyanates with certain materials, i.e. cyclohexylamine, alkyl amides, for example ethylene or methylene bis stearamide.

Most preferred are silica particles with a surface area as measured by BET measurement of at least 50 m²/g.

Suitable silica particles may be made according to any of the standard manufacturing techniques for example thermal decomposition of a silicon halide, decomposition and precipitation of a metal salt of silicic acid, i.e. sodium silicate and a gel formation method. Suitable silicas for use in the antifoams include therefore fumed silica, precipitated silica and gel formation silica. The average particle size of these fillers may range from 0.1 to 20 µm, but is preferably form 0.5 to 2.5 µm.

Where the filler particles are not hydrophobic by themselves, their surface is rendered hydrophobic at least to some extent in order to make the antifoam sufficiently effective in aqueous systems. Rendering the filler particles hydrophobic may be done prior to, or after, dispersing the filler particles in the liquid organopolysiloxane. This can be effected by treatment of the filler particles with treating agents, i.e. reactive silanes or siloxanes, for example dmethyl-dichlorosilane, trimethylchlorosilane, hexamethyldisilazane, hydroxyl end-blocked and methyl end-blocked polydimethylsiloxanes, siloxane resins or a mixture of one or more of these. Fillers that have already been treated with such compounds are commercially available from many companies, for example Sipernat®, D10 from Degussa. The surface of the filler may alternatively be rendered hydrophobic in situ, e.g. after the filler has been dispersed in the liquid organopolysiloxane component. This may be effected by adding to the liquid organopolysiloxane prior to, during or after the dispersion of the filler therein the appropriate amount of treating agent of the kind described above, and heating the mixture to a temperature above 40°C. The quantity of treating agent to be employed will depend, for example, on the nature of the agent and the filler and will be evident or ascertainable by those skilled in the art. Sufficient should be employed to endow the filler with at least a discernible degree of hydrophobicity. The filler particles are added to the organopolysiloxane in an amount of from 1 to 25% by weight of the antifoam, preferably from 1 to 15%, most preferably from 2 to 8%.

### Component (b) - Carriers

Examples of carriers that may be used in the foam control agents according to the present invention are zeolites, other silicates, for example magnesium silicate, phosphates, for example powdered or granular sodium tripolyphosphate, sodium sulphate, sodium carbonate, sodium perborate, a cellulose derivative such as sodium carboxymethylcellulose, granulated starch, clay, sodium citrate, sodium acetate, sodium bicarbonate and native starch.
The zeolite may be any of those aluminosilicate materials that are known to be beneficial in detergent powder compositions and have been described in a number of patent specifications. Zeolites are used in detergent compositions as cation exchange components. Suitable zeolite materials include particularly those which are known as zeolite A and have an average formula (Na₂O)ₘAl₂O₃(SiO₂)ₙ(H₂O)ₜ, wherein m has a value of from 0.9 to 1.3, n has a value of from 1.3 to 4.0 and t has a value of from 1 to 6. Suitable zeolites may be crystalline or amorphous aluminosilicates and have been described in particular in EP 192 442 and EP 329 842 and in the patent specifications that are referred to on page 2 of the latter specification. The zeolites or other carriers are used in an amount of from 45 to 99 parts by weight of the foam control composition, more preferably 50 to 99 %. Suitable zeolites may be pre-treated with e.g. non-ionic surfactants, but are preferably untreated zeolites, as they seem to provide a better stability of the foam control agent when stored in a powder detergent composition.

### Component (e) - Surfactants

The surfactant used in the foam control agent of the present invention is a substance that will modify the surface tension. If used, it is preferred that the surfactant is deposited on the carrier not later than the silicone antifoam. It is preferred that the surfactant is soluble or dispersible in an aqueous surfactant solution. The surfactant may be selected from anionic, cationic, nonionic or amphoteric materials. Mixtures of one or more of these may also be used. The surfactant can be an organic surfactant or an organopolysiloxane polyoxyalkylene copolymer. For example, a fatty alcohol ether sulphate or linear alkylbenzene sulphonate may be preferred with a polyacrylic acid binder. The surfactant can be added to the silicone undiluted or in emulsion before the silicone is mixed with the binder, or the surfactant and silicone can successively be added to the binder.

### Component (c) - Fluorescent whitening agents

Useful optical brighteners for the invention preferably conform to the formula 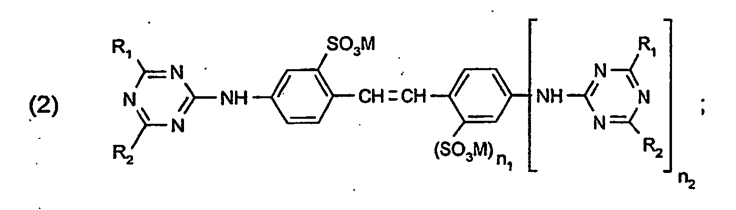 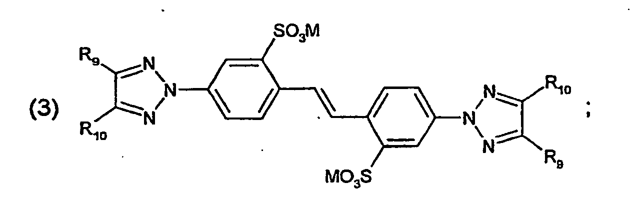 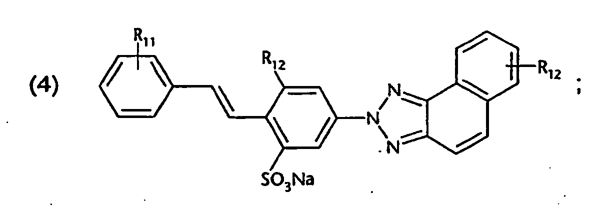 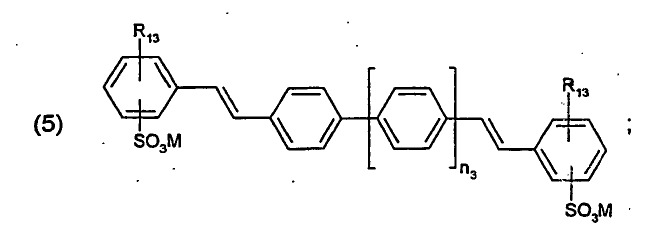 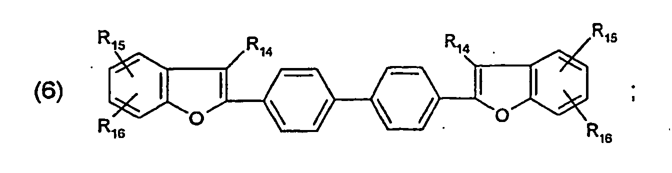 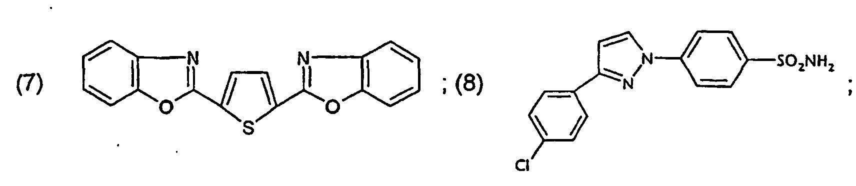 or 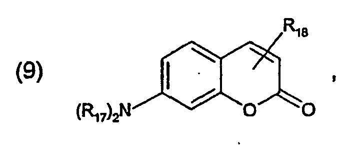 wherein
- R₁: is -OH; -Cl; -NH₂; -O-C₁-C₄alkyl; -O-aryl; -NH-C₁-C₄alkyl; -N(C₁-C₄alkyl)₂; -N(C₁-C₄alkyl)(C₁-C₄hydroxyalkyl); -N(C₁-C₄hydroxyalkyl)₂; -NH-aryl; morpholino; S-C₁-C₄alkyl(aryl); a radical of the formula 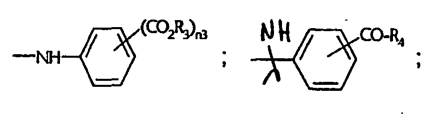 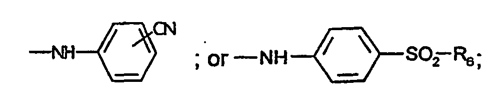
- R₂: is hydrogen; substituted or unsubstituted alkyl or aryl; -OH; -Cl; -NH₂; -O-C₁-C₄alkyl; -O-aryl; -NH-C₁-C₄alkyl; -N(C₁-C₄alkyl)₂; -N(C₁-C₄alkyl)(C₁-C₄hydroxyalkyl); -N(C₁-C₄hydroxyalkyl)₂; -NH-aryl; a radical of the formula 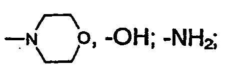 -N(CH₂CH₂OH)₂; -N[CH₂CH(OH)CH₃]₂; -NH-R₃;, -N(R₃)₂; or -OR₃;
- R₃: is substituted or unsubstituted alkyl or aryl; or M;
- R₄: is hydrogen; substituted or unsubstituted alkyl or aryl; or -NR₇R₈, wherein R₇ and R₈ are independently hydrogen; substituted or unsubstituted alkyl or aryl; or R₇ and R₈ combine with the joining nitrogen atom to form a heterocyclic radical, especially morpholino or piperidino radical;
- R₆: is hydrogen; or substituted or unsubstituted alkyl or aryl,
- R₉ and R₁₀: are independently hydrogen; C₁-C₄alkyl; phenyl; or a radical of the formula 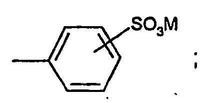
- R₁₁: is hydrogen; Cl; or SO₃M;
- R₁₂: is -CN;, -SO₃M; -S(C₁-C₄alkyl)₂ or S(aryl)₂;
- R₁₃: is hydrogen; -SO₃M; -O-C₁-C₄alkyl; -CN; -Cl; -COO-C₁-C₄alkyl; or CON(C₁-C₄alkyl)₂;
- R₁₄: is hydrogen; -C₁-C₄alkyl; -Cl; or -SO₃M;
- R₁₅: and R₁₆ are independently hydrogen; C₁-C₄alkyl; -SO₃M; -Cl; or -O-C₁-C₄alkyl;
- R₁₇: is hydrogen or C₁-C₄alkyl;
- R₁₈: is hydrogen; C₁-C₄alkyl; -CN; -Cl; -COO-C₁-C₄alkyl; -CON(C₁-C₄alkyl)₂ ; aryl; or -O-aryl;
- M: is hydrogen; Na; K; Ca; Mg; ammonium; mono-, di-, tri- or tetra-C₁-C₄alkylammonium; mono-, di- or tri-C₁-C₄hydroxyalkylammonium or ammonium that is di- or trisubstituted with a mixture of C₁-C₄alkyl and C₁-C₄hydroxyalkyl groups; and
- n₁ and n₂: are independently 0 or 1; and
- n₃: is 1 or 2.

(Substituted or unsubstituted) alkyl R₂, R₃, R₄, R₅, R₆, R₇ and R₈ is C₁-C₁₂alkyl, preferably C₁-C₄alkyl. Alkyl may be branched or unbranched and may be substituted by halogen, for example fluorine, chlorine or bromine, C₁-C₄alkoxy, for example methoxy or ethoxy, phenyl or carboxyl, C₁-C₄alkoxycarbonyl, for example acetyl, mono- or di-C₁-C₄alkylamino or -SO₃M. (Substituted or unsubstituted) aryl R₂, R₃, R₄, R₅, R₆, R₇ and R₈ is preferably a phenyl or naphthyl group which may be substituted by C₁-C₄alkyl, for example methyl, ethyl, propyl, isopropyl, butyl, isobutyl, sec-butyl or tert-butyl, C₁-C₄alkoxy, for example methoxy, ethoxy, propoxy, isopropoxy, butoxy, isobutoxy, sec-butoxy or tert-butoxy, halogen, for example fluorine, chlorine or bromine, C₂-C₅alkanoylamino, for example acetylamino, propionylamino or butyrylamino, nitro, sulfo or di- C₁-C₄alkylated amino.

The compounds of the formula (2) are preferably used in neutralized form, i.e. M is preferably a cation of an alkali metal, especially sodium, or an amine.

In the compounds of formula (2), R₁ is preferably -NH-aryl, preferably -NH-phenyl; or a radical of the formula 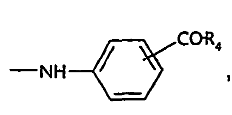 wherein R₄ is as defined above and is preferably C₁-C₄alkyl, especially methyl or ethyl, or -NR₇R₈, wherein R₇ and R₈ are each as defined above and are each preferably hydrogen, C₁-C₄alkyl, especially methyl or ethyl, or R₇ and R₈ together with the N atom form a morpholino or piperidino radical, most particularly hydrogen, or a radical of the formula 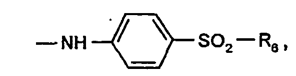 wherein R₆ is as defined above and is preferably -SO₃M substituted C₁-C₄alkyl, especially methyl- or ethyl-substituted -SO₃M, wherein M is as defined above and is preferably sodium; and

R₂ is preferably 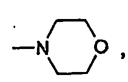 -NH₂, -N(CH₂CH₂OH)₂ or -N[CH₂CH(OH)CH₃]₂.

The compounds of the formula (2) are preparable under known reaction conditions by reacting cyanuric chloride with appropriate aminostilbenesulfonic acids and with an amino compound capable of introducing an R₁ group and with a compound capable of introducing an R₂ group, R₁ and R₂ being as defined above.

Optical brighteners that are advantageously useful in the present invention are recited below in Table 1 by way of example:

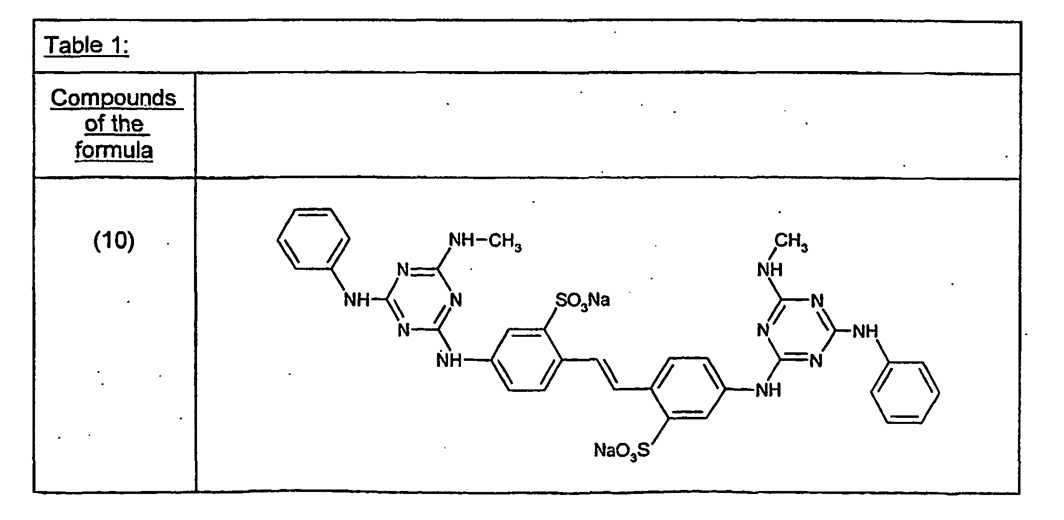

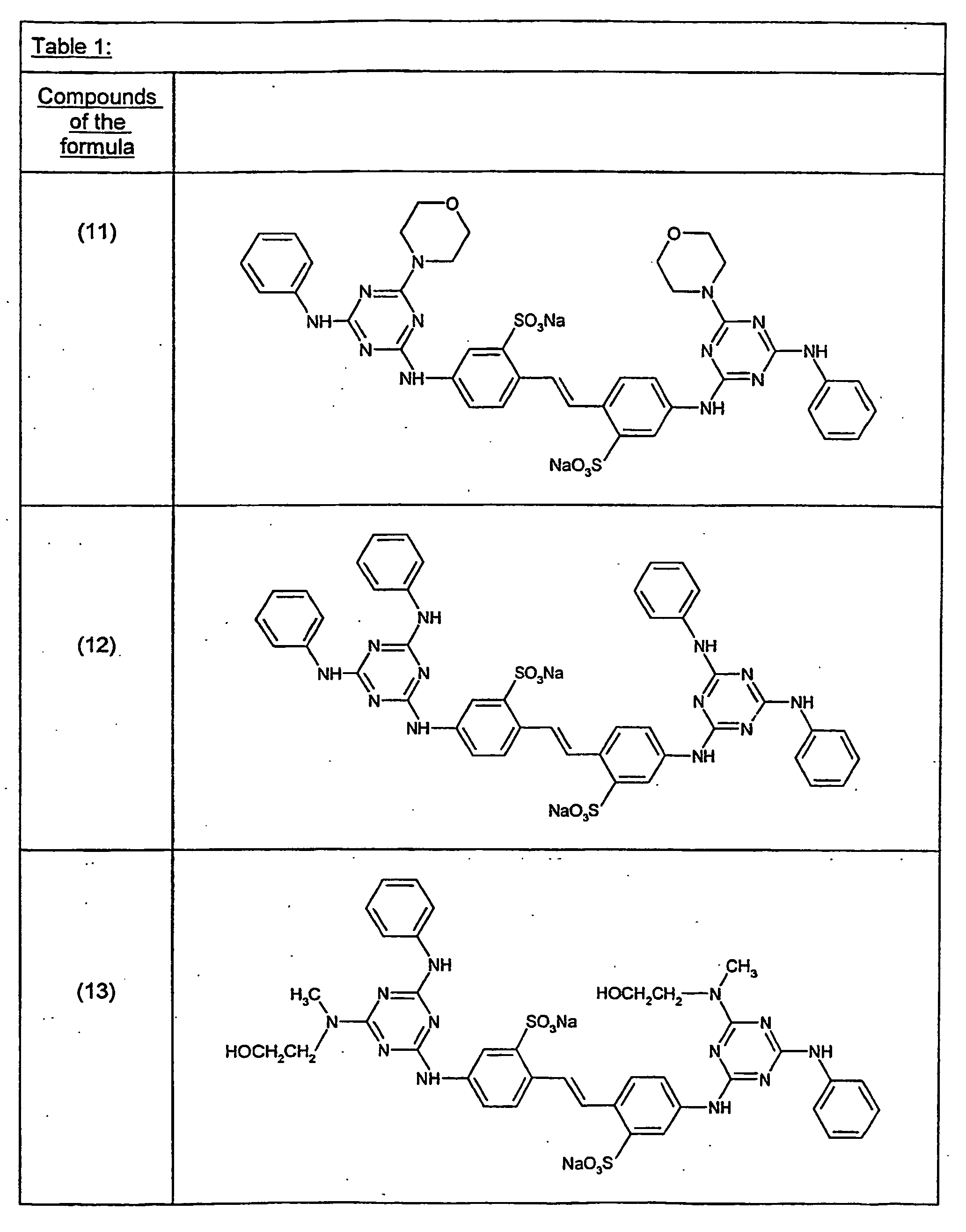

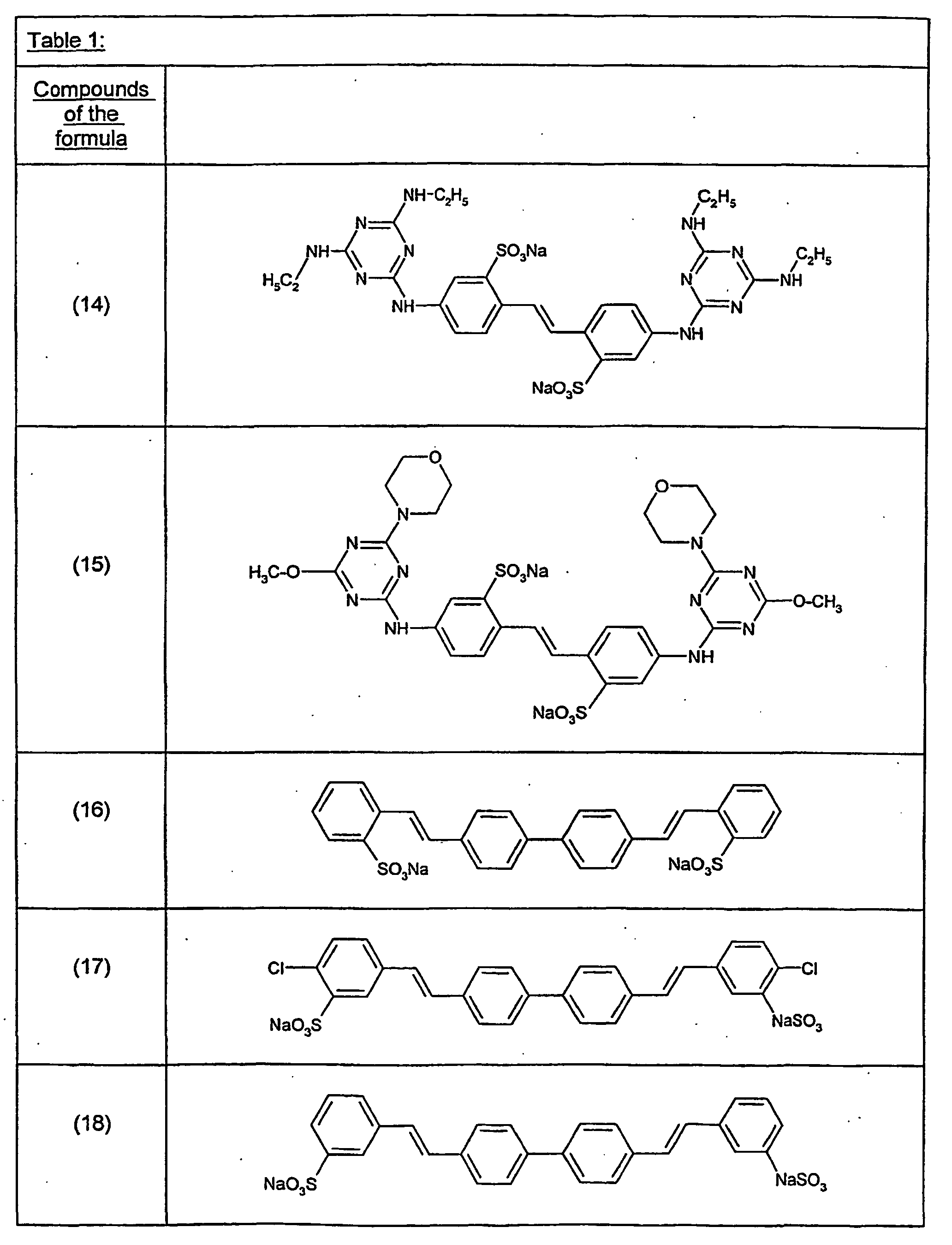

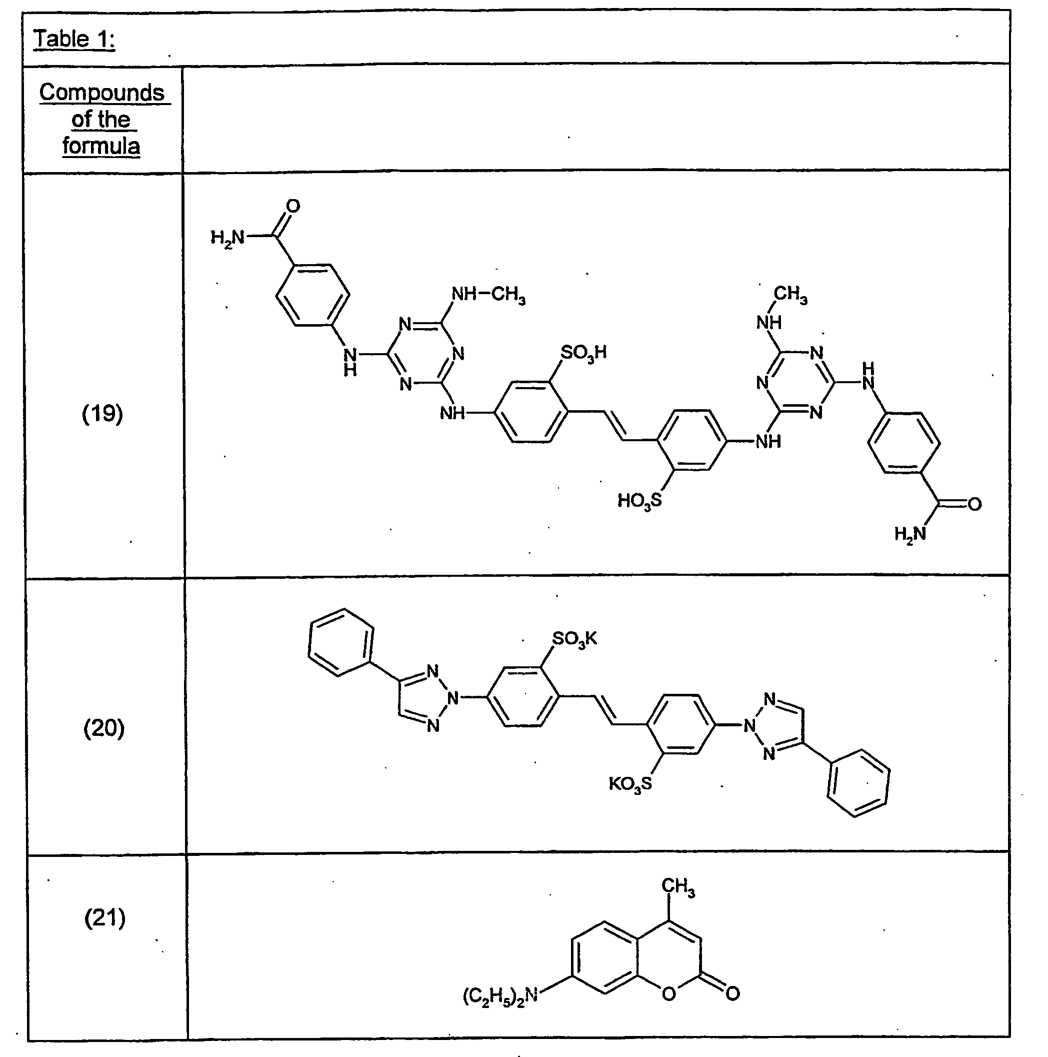

### Component (d) - binder

Examples of binders which can be used in the foam control agent of the present invention are polycarboxylates, polyoxyalkylene polymers such as polyethylene glycol, which can be applied molten or as an aqueous solution, reaction products of tallow alcohol and ethylene oxide, or polypropylene glycol, cellulose ethers, particularly water-soluble or water-swellable cellulose ethers such as sodium carboxymethylcellulose, gelatin, agar, microcrystalline waxes, fatty acids or fatty alcohols having 12 to 20 carbon atoms and a melting point in the range 45 to 80°C, a monoester of glycerol and such a fatty acid, a mixture of a water insoluble wax having a melting point in the range from above 55°C to below 100°C and a water-insoluble emulsifying agent, glucose or hydrogenated glucose.

Polycarboxylate binders are preferred. The polycarboxylate-type binder preferably has an acid pH value and even more preferably a pH of 5 or less when dissolved in water.

The pH of the polycarboxylate-binder is the pH of a solution of 10% by weight of the polycarboxylate-binder in water, measured at 296K (23°C).

The binder (component (d)) for use in the present invention allows to obtain an improved encapsulation or protection of the antifoam and the optical brightener, which is not adversely affected by a storing of the foam control agent for prolonged periods of time, even under humid conditions. The specified polycarboxylate-type binder achieves a strong interaction between a zeolite carrier material and the polycarboxylate binder. The stronger interaction between the zeolite carrier material and the polycarboxylate binder appears to result in an increased bond strength or cohesion within the polycarboxylate binder layer, thus providing a better protection of the silicone antifoam. In that way, the ability of moisture to break and open the encapsulating or protecting binder layer, which would result in an undesired release of the silicone anti-foam and the optical brightener from the foam control agent in a too early stage and absorption by or spreading of the silicone oil from the anti-foam over the detergent powder, can be significantly reduced. The improved encapsulation or protection has namely been found capable of showing an increased resistance towards moisture, thus preventing an undesired release of the antifoam and the optical brightener when storing the foam control agent for a prolonged period of time, even in humid conditions as a result of the increased interaction between the zeolite carrier and the polycarboxylate-type binder. In that way a foam control agent can be obtained with an improved encapsulation of the antifoam control agent, which results in an increased storage stability of the foam control agent.

Polycarboxylate materials are known as dispersing agents in detergent powders and are water soluble polymers, homopolymers, copolymers or salts thereof. They have at least 60% by weight of segments with the general formula 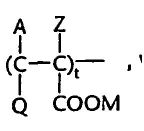 wherein
- A, Q and Z: are each selected from the group consisting of hydrogen, methyl, carboxy, carboxymethyl, hydroxy and hydroxymethyl;
- M: is hydrogen; alkali metal; ammonium or substituted ammonium; and
- t: is from 30 to 400.

Preferably A is hydrogen or hydroxy, Q is hydrogen or carboxy, and Z is hydrogen.

Suitable polymeric polycarboxylates include polymerised products of unsaturated monomeric acids, i.e. acrylic acid, maleic acid, maleic anhydride, fumaric acid, itaconic acid, aconitic acid, mesaconic acid, cetraconic acid and methylene malonic acid. Examples of preferred polycarboxylates include polyacrylic acid or a partial sodium salt thereof or a copolymer of acrylic acid, for example a copolymer with maleic anhydride.

The copolymerisation with lesser amounts of monomeric materials comprising no carboxylic acid, i.e. vinylmethyl, vinylmethylethers, styrene and ethylene, is not detrimental to the use of the polycarboxylates in the foam control agents of the present invention. Depending on the type of polycarboxylate this level can be kept low or levels can be up to about 40% by weight of the total polymer or copolymer.

Preferred polycarboxylates are those which have a molecular weight of no more than 9000.

More preferred polycarboxylates have a molecular weight of between 1000 and 6000. t has namely been found that the efficiency of the protection or encapsulation by the polyacrylate-type binder varies with its molecular weight.

Polycarboxylates with a molecular weight of no more than 9000 show an optimal mobility, so that an optimal encapsulation or protection can be achieved.

Particularly suitable polymeric polycarboxylates are the polyacrylates with an average viscosity at 23°C in mPa.s from 50 to 10,000, preferably from 1,500 to 8,000.

Carboxylates may be supplied in powder or liquid form. They may be liquid at room temperature or may be supplied as aqueous solutions. The latter are preferred as they facilitate the manufacture of the foam control agents according of the present invention with conventional spray applications.

### Detergent composition

The present invention also relates to a detergent composition in powder form which comprises 100 parts by weight of a detergent component and sufficient of a foam control agent according to the first aspect of the invention to give 0.02 to 5 parts by weight of the silicone antifoam comprised in the foam control agent.

Suitable detergent components are well known in the art and have been described in numerous publications. The components comprise an active detergent, organic and/or inorganic builder salts and other additives and diluents. The active detergent may comprise organic detergent surfactants of the anionic, cationic, non-ionic or amphoteric type, or mixtures thereof. Suitable anionic organic detergent surfactants include alkali metal soaps of higher fatty acids, alkyl aryl sulphonates for example sodium dodecyl benzene sulphonate, long chain (fatty) alcohol sulphates, olefin sulphates and sulphonates, sulphated monoglycerides, sulphated esters, sulphosuccinates, alkane sulphonates, phosphate esters, alkyl isothionates, sucrose esters and fluorosurfactants. Suitable cationic organic detergent surfactants include alkylamine salts, quaternary ammonium salts, sulphonioum salts and phosphonium salts. Suitable non-ionic detergent surfactants include condensates of ethylene oxide with a long chain (fatty) alcohol or (fatty) acid, for example C₁₄-C₁₅alcohol condensed with 7 moles of ethylene oxide (Dobanol® 45-7), condensates of ethylene oxide with an amine or amide, condensation products of ethylene and propylene oxides, fatty acid alkylol amide and fatty amine oxides. Suitable amphoteric organic detergent surfactants include imidazoline compounds, alkylaminoacid salts and betaines. Examples of inorganic components are phosphates, polyphosphates, silicates, carbonates, sulphates, oxygen releasing compounds such as sodium perborate and other bleaching agents and aluminosilicates, e.g. zeolites. Examples of organic components are anti-redeposition agents such as carboxymethylcellulose (CMC), brighteners, chelating agents, such as ethylene diamine tetra-acetic acid (EDTA) and nitrilotriacetic acid (NTA), enzymes and bacteriostats. Other optional components include colorants, dyes, perfumes, softeners, clays, some of which may be encapsulated. Materials suitable for the detergent component are well known to the person skilled in the art and are described in many text books as well as other publications.

### Process of preparation

The present invention also relates to a method for the preparation of a foam control agent which comprises depositing from 1 to 30 parts by weight of a silicone antifoam and from 2 to 50 parts by weight of a fluorescent whitening agent, on from 45 to 99 parts by weight of a particulate carrier, together with or after from 1 to 60% by weight of the silicone antifoam of a surface active agent, and from 1 to 40 parts by weight of a binder, have been deposited on the carrier.
It is preferred that a polycarboxylate binder and the surface active agent are deposited onto a zeolite carrier not later than the silicone antifoam and the fluorescent whitening agent to achieve optimum storage stability of the foam control agent and fluorescent whitening agent.

An even more preferred method is where a mixture of the four components (silicone antifoam, surface active agent, fluorescent whitening agent and binder) is made according to any of the known methods, and this mixture deposited onto the carrier

The premix can be made by simply mixing the ingredients, preferably with reasonable shear or high shear. Where one or more ingredients are solid or waxy materials, or materials of high viscosity, it may be beneficial to heat the mixture to melt or reduce the working viscosity of the mix. Alternatively the premix of the components may be diluted with a solvent, e.g. a low viscosity siloxane polymer, cyclic siloxane polymer, organic solvent or even by making a dispersion in water.

Depositing the mix onto a carrier can be done in a number of ways. Conventional procedures of making powders are particularly useful for making the particulate foam control agent. These include depositing of a previously prepared mixture of all of the two, three or four components onto the zeolite which is the most preferred method.

One particularly useful way of depositing the components onto the carrier is by spraying one or more of these onto the carrier which may be present in a drum mixer, fluidised bed etc. This may be done at room temperature or at elevated temperature, which is particularly useful if one wants to evaporate some or all of the solvent during the process. In one process the carrier powder is mixed with the premix of all the other components, e.g. in a high shear mixer, e.g. Eirich® pan granulator, Schugi® mixer, Paxeson-Kelly® twin-core blender, Loedige® ploughshare mixer, Aeromatic® fluidised bed granulator or Pharma® type drum mixer. The deposition may be done by pouring the mixture into the mixer, as an alternative to spraying as described above.

In an alternative process, a fluorescent whitening agent which is a solid powder can be mixed with the carrier. The silicone antifoam and binder can be deposited on the mixture of carrier and fluorescent whitening agent.

The process of the invention uses from 1 to 30 parts by weight of silicone antifoam and from 45 to 99 parts by weight of zeolite. If a lower amount of silicone antifoam are to be used this would make the foam control agent less effective as the silicone antifoam would be too thirly distributed on the carrier material. Higher amounts than 30 parts of silicone antifoam are possible in theory, but are not practical, as this would render the dispersion of the foam control agent in the powder detergent more difficult and one could not be sure that each measure of powder detergent would incorporate the correct amount of silicone antifoam. Higher levels would also possibly result in a more tacky material which would not be granulated very easily.

Thus use of 1 to 60% of surface active agent by weight based on the weight of the silicone antifoam is chosen for efficiency reasons as well as to minimize the amount of material which is to be introduced in the powder detergent which is not per se beneficial to the cleaning efficiency of the detergent composition. It is more preferred to use 5 to 60 % by weight, especially 5 to 35 % by weight, based on the weight of the silicone antifoam.

The amount of binder, for example polycarboxylate, is from 1 to 40 parts by weight of the composition. Preferably the binder is used in amounts of from 1 to 30 parts, most preferably 4 to 25 parts by weight.

The invention is further illustrated in the following examples. All parts and percentages are given by weight unless otherwise indicated.

### EXAMPLE 1

A co-granule was prepared by mixing approximately 62 parts of zeolite 4A HA, a zeolite manufactured by Zeoline, with approximately 15.9 parts of a Sokalan PA25 PN polycarboxylate binder material provided by BASF, approximately 14.2 parts of a silicone antifoam, comprising a branched polymethylsiloxane polymer and hydrophobic silica, approximately 5.9 parts of a solution of an organic surfactant being a Sodium Laurylether Sulfate solution provided by IfraChem under the name Ifrapon LOS 2N 70 and approximately 39.4 parts of a Tinopal DMS Slurry 36 provided by Ciba. The mixture was prepared by pure mechanically mixing the antifoam, the surfactant, binder and optical brightener together and pouring the mixture very slowly into a drum mixer in which the zeolite was placed. The mixture was stirred continuously until a particulate material was obtained. The obtained granule is then dried in a fluidized bed for 20 minutes.

### EXAMPLE 2

A co-granule was prepared by mixing approximately 62.3 parts of zeolite 4A HA, a zeolite manufactured by Zeoline, with approximately 15.8 parts of a Sokalan PA25 PN polycarboxylate binder material provided by BASF, approximately 14.2 parts of a silicone antifoam comprising an organopolysiloxane material having at least one silicon-bonded substituent of the formula X-Ph, wherein X denotes a divalent aliphatic hydrocarbon group and Ph denotes an optionally substituted aromatic group, an organosilicon resin and a hydrophobic filler, approximately 4.1 parts of an organic surfactant being a Sodium N-Lauroyl Sarcosinate solution provided under the name Crodasinic LS35 by Croda and approximately 39.3 parts of a Tinopal DMS Slurry 36 provided by Ciba. The mixture was prepared by pure mechanically mixing the antifoam, the surfactant, binder and optical brightener together and pouring the mixture very slowly into a drum mixer in which the zeolite was placed. The mixture was stirred continuously until a particulate material was obtained. The obtained granule is then dried in a fluidized bed for 20 minutes.

### EXAMPLE 3

A co-granule was prepared by mixing approximately 78.95 parts of zeolite 4A HA, a zeolite manufactured by Zeoline, with approximately 14.8 parts of a Sokalan PA25 PN polycarboxylate binder material provided by BASF, approximately 12.6 parts of a silicone antifoam comprising an organopolysiloxane material having at least one silicon-bonded substituent of the formula X-Ph, wherein X denotes a divalent aliphatic hydrocarbon group and Ph denotes an optionally substituted aromatic group, an organosilicon resin and a hydrophobic filler, and approximately 3 parts of an organic surfactant being a Sodium N-Lauroyl Sarcosinate solution provided under the name Crodasinic LS35 by Croda. The mixture was prepared by pure mechanically mixing the antifoam, the surfactant and the binder and pouring the mixture very slowly into a drum mixer in which the zeolite was placed. The mixture was stirred continuously until a particulate material was obtained. The obtained granule is then postcoated in a fluidized bed with Tinopal CBS-CL provided by Ciba to achieve a final concentration of active optical brightener in the granule of about 6 %. The granule is dried in the fluidized bed.

### EXAMPLE 4

A co-granule was prepared by mixing approximately 80.7 parts of zeolite 4A MA, a zeolite manufactured by Zeoline, with approximately 10.4 parts of a Sokalan PA25 PN polycarboxylate binder material provided by BASF, approximately 7 parts of a silicone antifoam, comprising a branched polymethylsiloxane polymer and hydrophobic silica, approximately 3 parts of a solution of an organic surfactant being a Sodium Laurylether Sulfate solution provided by IfraChem under the name Ifrapon LOS 2N 70 and approximately 20.8 parts of a Tinopal CBS SP Slurry 33 provided by Ciba. The mixture was prepared by pure mechanically mixing the antifoam, the surfactant, binder and optical brightener together and pouring the mixture very slowly into a drum mixer in which the zeolite was placed. The mixture was stirred continuously until a particulate material was obtained. The obtained granule is then dried in a fluidized bed for 20 minutes.

### EXAMPLE 5

A co-granule was prepared by mixing approximately 79.4 parts of zeolite 4A MA, a zeolite manufactured by Zeoline, with approximately 10.4 parts of a Sokalan PA25 PN polycarboxylate binder material provided by BASF, approximately 7.1 parts of a silicone antifoam comprising an organopolysiloxane material having at least one silicon-bonded substituent of the formula X-Ph, wherein X denotes a divalent aliphatic hydrocarbon group and Ph denotes an optionally substituted aromatic group, an organosilicon resin and a hydrophobic filler, approximately 3 parts of a solution of an organic surfactant being a Sodium Laurylether Sulfate solution provided by IfraChem under the name Ifrapon LOS 2N 70 and approximately 20.9 parts of a Tinopal DMS Slurry 36 provided by Ciba. The mixture was prepared by pure mechanically mixing the antifoam, the surfactant, binder and optical brightener together and pouring the mixture very slowly into a drum mixer in which the zeolite was placed. The mixture was stirred continuously until a particulate material was obtained. The obtained granule is then dried in a fluidized bed for 20 minutes.

### EXAMPLE 6

A co-granule was prepared by mixing approximately 79.3 parts of zeolite 4A MA, a zeolite manufactured by Zeoline, with approximately 10.4 parts of a Sokalan PA25 PN polycarboxylate binder material provided by BASF, approximately 7.1 parts of a silicone antifoam, comprising a branched polymethylsiloxane polymer and hydrophobic silica, approximately 3 parts of a solution of an organic surfactant being a Sodium Laurylether Sulfate solution provided by IfraChem under the name Ifrapon LOS 2N 70 and approximately 20.9 parts of a Tinopal DMS Slurry 36 provided by Ciba. The mixture was prepared by pure mechanically mixing the antifoam, the surfactant, binder and optical brightener together and pouring the mixture very slowly into a drum mixer in which the zeolite was placed. The mixture was stirred continuously until a particulate material was obtained. The obtained granule is then dried in a fluidized bed for 20 minutes.

### Comparative EXAMPLE

A granule was prepared by mixing approximately 85 parts of zeolite 4A MA, a zeolite manufactured by Zeoline, with approximately 14 parts of a Sokalan PA25 PN polycarboxylate binder material provided by BASF, and approximately 22.1 parts of a Tinopal DMS Slurry 36 provided by Ciba. The mixture was prepared by pure mechanically mixing the binder and the optical brightener together and pouring the mixture very slowly into a drum mixer in which the zeolite was placed. The mixture was stirred continuously until a particulate material was obtained. The obtained granule is then dried in a fluidized bed for 20 minutes.

The granules prepared in examples 5, 6 and the comparative example were tested for whiteness index and spotting behavior. The level of active optical brightener has been analytically measured in the 3 granules and is respectively 10.44 %, 10.4 % and 10.8 %.

### Determination of Whiteness Delivery

The whiteness performance is evaluated on bleached cotton by washing under laboratory scale conditions at the following European washing conditions:

| | |
|---|---|
| Detergent type: | Standard Detergent ECE77 |
| Detergent dosage: | 100g per kg |
| Formulations (5a)-(5c): | 1 % based on the detergent |
| Liquor ratio: | 10 to 1 |
| Washing temperature: | 40°C |
| Washing time: | 15 minutes |
| Test fabric: | bleached cotton renforcé |
| Wash cycles: | 1 - 3 and 5 cycles |
| Drying: indoor i.e. by ironing | |

The results are listed in Table 2.

**Table 2:**

| formulation | Equivalent FWA concentration compound of formula (11) | Whiteness Ganz | | |
|---|---|---|---|---|
| | | 1^{st} cycle | 3^{rd} cycle | 5^{th} cycle |
| Comparative example | 0.15% | 152 | 192 | 206 |
| Example 5 | 0.15% | 147 | 187 | 200 |
| Example 6 | 0.16% | 149 | 188 | 202 |

The formulations show a good whiteness effect.

### Determination of the spotting/ leveling behavior

### Conditions:

1.Spotting: 30mg FWA compounds are spread on the upper layer of 10g bleached cotton fabric folded in 4 layers, wetted with 50ml water.
2.Washing: 100 g standard detergent ECE77 per kg fabric, liqor ratio. 10 to 1, 15 minutes washing at 40°C on bleached cotton renforcé after 5 minutes contact time of the FWA compounds on the wet fabric.

The spotting/ leveling behavior is evaluated under lab test conditions according to the conditions mentioned on Table 3:

**Table 3:**

| Spotting behavior of FWA containing foamcontrol agents | |
|---|---|
| formulation | Visual evaluation under day-light conditions |
| Comparative Example | No spotting |
| Example 5 | No spotting |
| Example 6 | No spotting |

According to the spotting tests done under lab scale conditions, the formulations do not cause any spotting.

## Claims

1. A particulate foam control agent comprising
(a) from 1 to 30 parts by weight of a silicone antifoam;
(b) from 45 to 99 parts by weight of a particulate carrier for the antifoam,
(c) from 2 to 50 parts by weight of a fluorescent whitening agent; and
(d) from 1 to 40 parts by weight of a binder.

2. A particulate foam control agent as claimed in claim 1, wherein component (a) is a liquid organopolysiloxane polymer and a filler particle the surface of which has been rendered hydrophobic, the organopolysiloxane being a linear or branched polymer having a structure according to formula 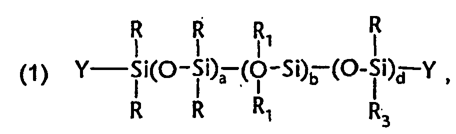 wherein
R denotes a monovalent hydrocarbon group having from 1 to 8 carbon atoms, preferably from 1 to 4 carbon atoms;
R₁ denotes a group R; a hydroxyl group; or a group (1a) 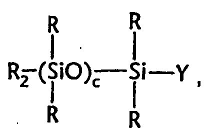 wherein
R₂ denotes a divalent hydrocarbon, hydrocarbonoxy or siloxane group or oxygen;
R₃ denotes a C₉-C₃₅alkyl group;
Y denotes a group R or a hydroxyl group;
a,b, c and d have a value of 0 or an integer, provided at least one of a and b is an integer, and the total of a+b+c+d has a value such that the viscosity of the organopolysiloxane polymer at 25°C is at least 50 mm²/s.

3. A particulate foam control agent as claimed in claim 1, wherein component (a) comprises (A) an organo-polysiloxane material having at least one silicone-bonded substituent of the formula X-Ph, wherein X denotes a divalent aliphatic hydrocarbon group and Ph denotes an optionally substituted aromatic group and (B) an organosilicon resin and (C) a hydrophobic filler. The organosilicon resin (B) preferably consists of siloxane units of the formula R'ₐSiO_{4-a/2} wherein R' denotes a hydroxyl, hydrocarbon or hydrocarbonoxy group, particularly trialkylsiloxy units and SiO_{4/2} units, wherein a has a value of from 0.5 to 2.4.

4. A particulate foam control agent as claimed in any of claims 1 to 3, wherein the particulate foam control agent additionally contains from 1 to 60% by weight of the silicone antifoam of a surface active agent (component (e)).

5. A particulate foam control agent as claimed in any of claims 1 to 4, wherein the carrier (component (b)) is a zeolite.

6. A particulate foam control agent as claimed in claim 5, wherein component (b) is a zeolite A type and has an average formula (Na₂O)ₘAl₂O₃(SiO₂)ₙ(H₂O)ₜ, wherein m has a value of from 0.9 to 1.3, n has a value of from 1.3 to 4.0 and t has a value of from 1 to 6.

7. A particulate foam control agent as claimed in any of claims 1 to 6, wherein the fluorescent whitening agent (component (c)) is selected from the compounds of formulae 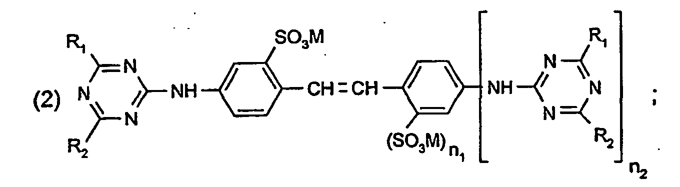 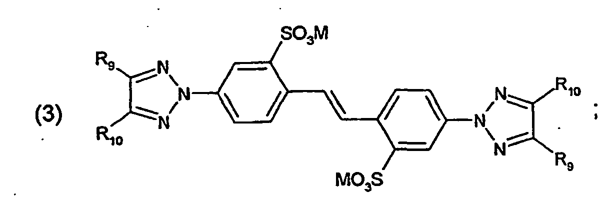 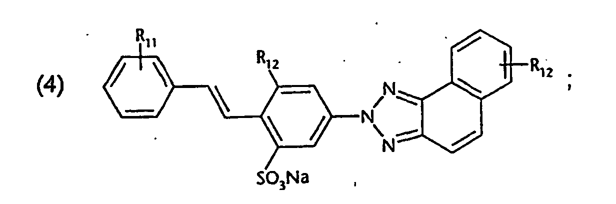 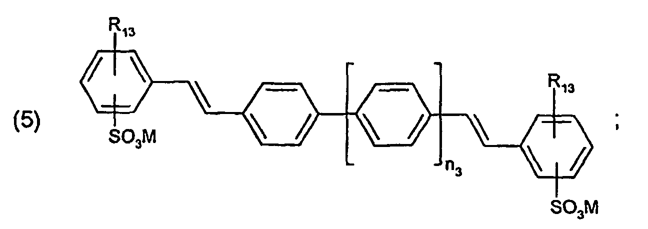 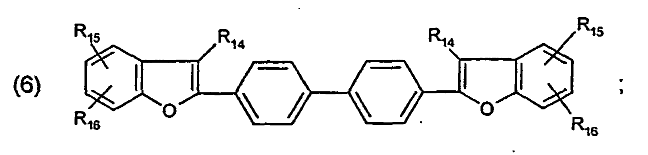 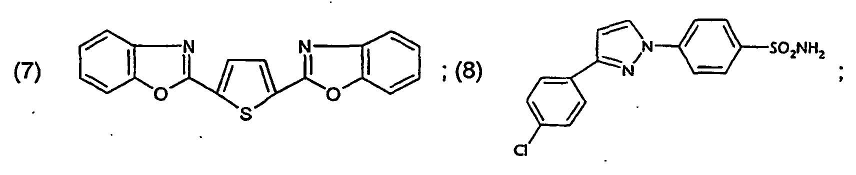 and 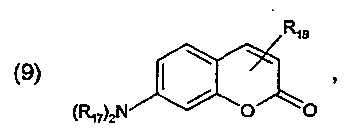 wherein
R₁ is -OH; -Cl; -NH₂; -O-C₁-C₄alkyl; -O-aryl; -NH-C₁-C₄alkyl; -N(C₁-C₄alkyl)₂; -N(C₁-C₄alkyl)(C₁-C₄hydroxyalkyl); -N(C₁-C₄hydroxyalkyl)₂; -NH-aryl; morpholino; S-C₁-C₄alkyl(aryl); a radical of the formula 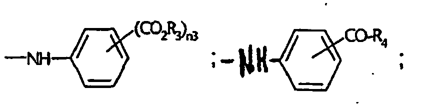 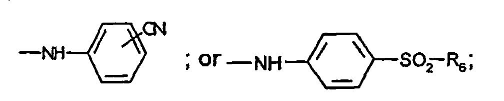
R₂ is hydrogen; substituted or unsubstituted alkyl or aryl; -OH; -Cl; -NH₂ -O-C₁-C₄alkyl; -O-aryl; -NH-C₁-C-₄alkyl; -N(C₁-C₄alkyl)₂; -N(C₁-C₄alkyl)(C₁-C₄hydroxyalkyl); -N(C₁-C₄hydroxyalkyl)₂; -NH-aryl; a radical of the formula 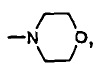 -OH; -NH₂; -N(CH₂CH₂OH)₂; -N[CH₂CH(OH)CH₃]₂, -NH-R₃, -N(R₃)₂ or -OR₃;
R₃ is substituted or unsubstituted alkyl or aryl; or M;
R₄ is hydrogen; substituted or unsubstituted alkyl or aryl; or -NR₇R₈, wherein R₇ and R₈ are independently hydrogen; substituted or unsubstituted alkyl or aryl; or R₇ and R₈ combine with the joining nitrogen atom to form a heterocyclic radical;
R₆ is hydrogen; or substituted or unsubstituted alkyl or aryl;
R₉ and R₁₀ are independently hydrogen; C₁-C₄alkyl; phenyl; or a radical of the formula 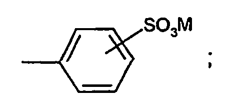
R₁₁ is hydrogen; Cl; or SO₃M;
R₁₂ is -CN; -SO₃M; -S(C₁-C₄alkyl)₂; or S(aryl)₂;
R₁₃ is hydrogen; -SO₃M; -O-C₁-C₄alkyl; -CN; -Cl; -COO-C₁-C₄alkyl; or CON(C₁-C₄alkyl)₂;
R₁₄ is hydrogen; -C₁-C₄alkyl; -Cl; or -SO₃M;
R₁₅ and R₁₆ are independently hydrogen; C₁-C₄alkyl; -SO₃M; -Cl; or -O-C₁-C₄alkyl;
R₁₇ is hydrogen; or C₁-C₄alkyl;
R₁₈ is hydrogen; C₁-C₄alkyl; -CN; -Cl; -COO-C₁-C₄alkyl; -CON(C₁-C₄alkyl)₂; aryl; or -O-aryl;
M is hydrogen; Na; K; Ca; Mg; ammonium; mono-, di-, tri- or tetra-C₁-C₄alkylammonium; mono-, di- or tri-C₁-C₄hydroxyalkylammonium; or ammonium that is di- or trisubstituted with a mixture of C₁-C₄alkyl and C₁-C₄hydroxyalkyl groups; and
n₁ and n₂ are independently 0 or 1; and
n₃ is 1 or 2.

8. A particulate foam control agent as claimed in claim 7, wherein component (c) corresponds to formula (2), wherein
R₁ is -NH-aryl; or a radical of the formula 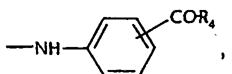 wherein R₄ is C₁-C₄alkyl; or -NR₇R₈, wherein R₇ and R₈ are hydrogen; C₁-C₄alkyl, or R₇ and R₈ together with the N atom form, a morpholino or piperidino radical; and M is sodium; and
R₂ is 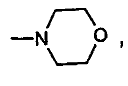 -NH₂, -N(CH₂CH₂OH)₂ or -N[CH₂CH(OH)CH₃]₂.

9. A particulate foam control agent as claimed in any of claims 1 to 8, wherein the binder (component (d)) is a polycarboxylate

10. A particulate foam control agent as claimed in claim 9, wherein the polycarboxylate binder has a molecular weight of no more than 9000.

11. A particulate foam control agent as claimed in any of claims 1 to 10, wherein the polycarboxylate binder (component (d)) has been acidified to a pH of 6.5 or less, prior to the preparation of the foam control agent.

12. A detergent composition in powder form comprising 100 parts by weight of a detergent component and a sufficient amount of a particulate foam control agent comprising
(a)from 1 to 30 parts by weight of a silicone antifoam,
(b) from 45 to 99 parts by weight of a zeolite carrier for the antifoam,
(e) from 1 to 60% by weight of the silicone antifoam of a surface active agent which has been deposited on the zeolite carrier not later than the silicone
(c) from 2 to 50 parts by weight of a fluorescent whitening agent; and
(d) from 1 to 40 parts by weight of a polycarboxylate binder or encapsulant, to give 0.02 to 5 parts by weight of the silicone antifoam comprised in the foam control agent.

13. A method for the preparation of a foam control agent which comprises depositing from 1 to 30 parts by weight of a silicone antifoam and 2 to 50 parts by weight of a fluorescent whitening agent on 45 to 99 parts by weight of a zeolite carrier, said silicone antifoam and fluorescent whitening agent being deposited together with or after the deposition of 1 to 60% by weight of the silicone antifoam of a surface active agent and 1 to 40 parts by weight of a polycarboxylate binder or encapsulant.

## Patentansprüche

1. Teilchenförmiges Schaumregulierungsmittel, enthaltend:
(a) 1 bis 30 Gewichtsteile eines Siliconantischaummittels,
(b) 45 bis 99 Gewichtsteile eines teilchenförmigen Trägerstoffes für das Antischaummittel,
(c) 2 bis 50 Gewichtsteile eines fluoreszierenden Weißmachers und
(d) 1 bis 40 Gewichtsteile eines Bindemittels.

2. Teilchenförmiges Schaumregulierungsmittel wie in Anspruch 1 beansprucht, wobei Komponente (a) ein flüssiges Organopolysiloxanpolymer und ein Füllstoffteilchen ist, dessen Oberfläche hydrophob gemacht wurde, wobei das Organopolysiloxan ein lineares oder verzweigtes Polymer mit einer Struktur gemäß der Formel 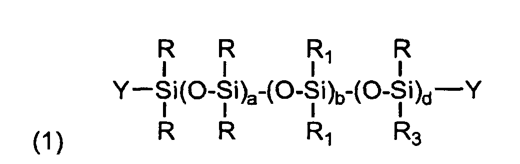 ist, wobei
R eine einbindige Kohlenwasserstoffgruppe mit 1 bis 8 Kohlenstoffatomen, bevorzugt 1 bis 4 Kohlenstoffatomen, bezeichnet,
R₁ eine Gruppe R, eine Hydroxylgruppe oder eine Gruppe 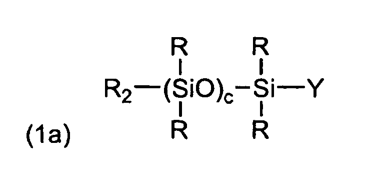 bezeichnet, wobei
R₂ eine zweibindige Kohlenwasserstoff-, Hydrocarbonoxy- oder Siloxangruppe oder Sauerstoff bezeichnet,
R₃ eine C₉-C₃₅-Alkylgruppe bezeichnet,
Y eine Gruppe R oder eine Hydroxylgruppe bezeichnet,
a, b, c und d einen Wert von 0 haben oder eine ganze Zahl sind, unter der Voraussetzung, dass wenigstens eines von a und b eine ganze Zahl ist und die Gesamtsumme von a+b+c+d einen Wert hat, so dass die Viskosität des Organopolysiloxanpolymers bei 25°C wenigstens 50 mm²/s ist.

3. Teilchenförmiges Schaumregulierungsmittel wie in Anspruch 1 beansprucht, wobei Komponente (a) ein (A) Organopolysiloxanmaterial mit wenigstens einem silicongebundenen Substituenten der Formel X-Ph, worin X eine zweibindige aliphatische Wasserstoffgruppe bezeichnet und Ph eine gegebenenfalls substituierte aromatische Gruppe bezeichnet, und (B) ein Organosiliciumharz und (C) einen hydrophoben Füllstoff enthält. Das Organosiliciumharz (B) besteht bevorzugt aus Siloxaneinheiten der Formel R'ₐSiO_{4-a/2}, worin R' eine Hydroxyl-, Kohlenwasserstoff- oder Hydrocarbonoxygruppe bezeichnet, insbesondere Trialkylsiloxyeinheiten und SiO_{4/2}-Einheiten, wobei a einen Wert von 0,5 bis 2,4 hat.

4. Teilchenförmiges Schaumregulierungsmittel wie in einem der Ansprüche 1 bis 3 beansprucht, wobei das teilchenförmige Schaumregulierungsmittel zusätzlich 1 bis 60%, bezogen auf das Gewicht des Siliconantischaummittels, eines oberflächenaktiven Mittels (Komponente (e)) enthält.

5. Teilchenförmiges Schaumregulierungsmittel wie in einem der Ansprüche 1 bis 4 beansprucht, wobei der Trägerstoff (Komponente (b)) ein Zeolith ist.

6. Teilchenförmiges Schaumregulierungsmittel wie in Anspruch 5 beansprucht, wobei Komponente (b) ein Zeolith vom A-Typ ist und eine gemittelte Formel (Na₂O)ₘAl₂O₃(SiO₂)ₙ(H₂O)ₜ hat, worin m einen Wert von 0,9 bis 1,3 hat, n einen Wert von 1,3 bis 4,0 hat und t einen Wert von 1 bis 6 hat.

7. Teilchenförmiges Schaumregulierungsmittel wie in einem der Ansprüche 1 bis 6 beansprucht, wobei der fluoreszierende Weißmacher (Komponente (c)) ausgewählt aus den Verbindungen mit den Formeln 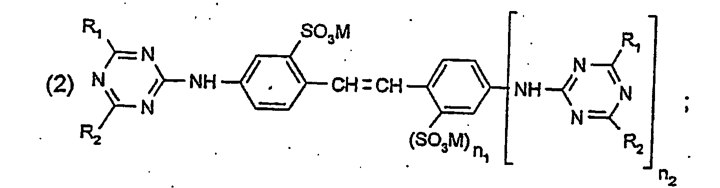 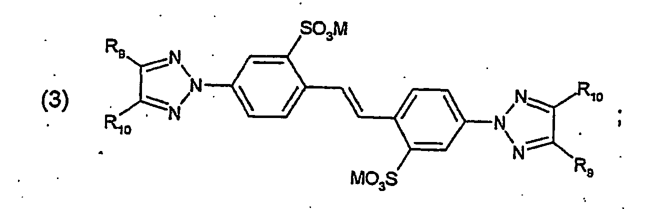 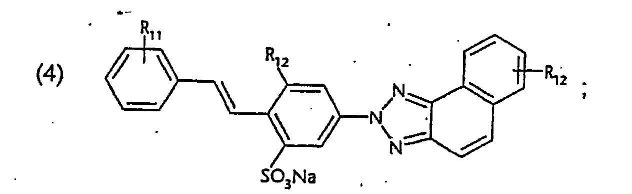 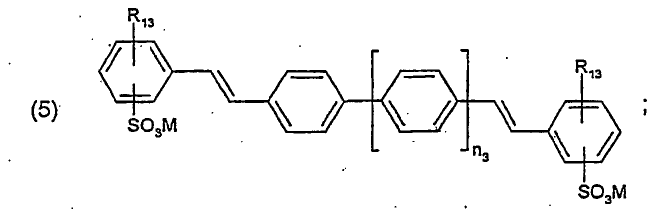 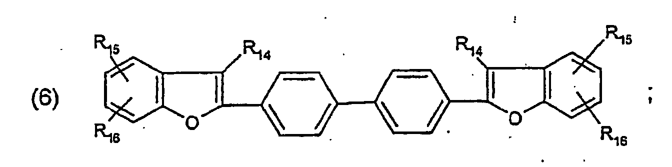 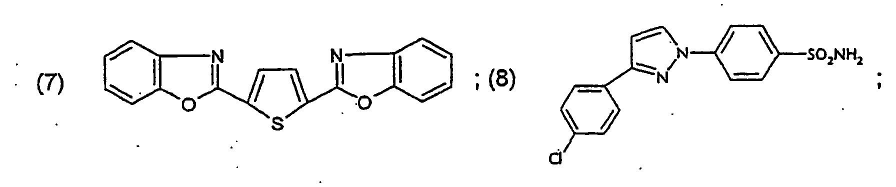 und 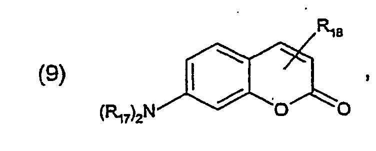 worin
R₁ gleich -OH, -Cl, -NH₂, -O-C₁-C₄-Alkyl, -O-Aryl, -NH-C₁-C₄-Alkyl, -N(C₁-C₄-Alkyl)₂, -N(C₁-C₄-Alkyl)(C₁-C₄-Hydroxyalkyl), -N(C₁-C₄-Hydroxyalkyl)₂, -NH-Aryl, Morpholino, S-C₁-C₄-Alkyl(aryl), ein Rest der Formel 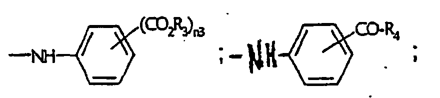 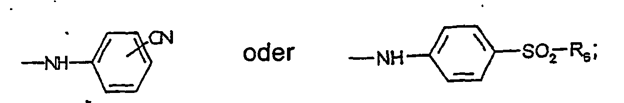 ist,
R₂ gleich Wasserstoff, substituiertes oder unsubstituiertes Alkyl oder Aryl, -OH, -Cl, -NH₂, -O-C₁-C₄-Alkyl, -O-Aryl, -NH-C₁-C₄-Alkyl, -N(C₁-C₄-Alkyl)₂, -N(C₁-C₄-Alkyl)(C₁-C₄-Hydroxyalkyl), -N(C₁-C₄-Hydroxyalkyl)₂, -NH-Aryl, ein Rest der Formel 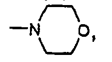 -OH, -NH₂, -N(CH₂CH₂OH)₂, -N[CH₂CH(OH)CH₃]₂, -NH-R₃, -N(R₃)₂ oder -OR₃ ist,
R₃ ein substituiertes oder unsubstituiertes Alkyl oder Aryl oder M ist,
R₄ gleich Wasserstoff, substituiertes oder unsubstituiertes Alkyl oder Aryl oder -NR₇R₈ ist, worin R₇ und R₈ unabhängig voneinander Wasserstoff, substituiertes oder unsubstituiertes Alkyl oder Aryl sind oder R₇ und R₈ sich mit dem anhängigen Stickstoffatom vereinigen, um einen heterocyclischen Rest zu bilden,
R₆ gleich Wasserstoff oder ein substituiertes oder unsubstituiertes Alkyl oder Aryl ist,
R₉ und R₁₀ unabhängig voneinander Wasserstoff, C₁-C₄-Alkyl, Phenyl oder ein Rest der Formel 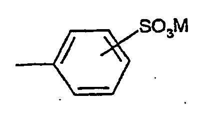 sind,
R₁₁ gleich Wasserstoff, Cl oder SO₃M ist,
R₁₂ gleich -CN, -SO₃M, -S(C₁-C₄-Alkyl)₂ oder S(Aryl)₂ ist,
R₁₃ gleich Wasserstoff, -SO₃M, -O-C₁-C₄-Alkyl, -CN, -Cl, -COO-C₁-C₄-Alkyl oder CON(C₁-C₄-Alkyl)₂ ist,
R₁₄ gleich Wasserstoff, C₁-C₄-Alkyl, -Cl oder SO₃M ist,
R₁₅ und R₁₆ unabhängig voneinander Wasserstoff, C₁-C₄-Alkyl, -SO₃M, -Cl oder -O-C₁-C₄-Alkyl sind,
R₁₇ gleich Wasserstoff oder C₁-C₄-Alkyl ist,
R₁₈ gleich Wasserstoff, C₁-C₄-Alkyl, -CN, -Cl, -COO-C₁-C₄-Alkyl, -CON(C₁-C₄-Alkyl)₂, Aryl oder -O-Aryl ist,
M gleich Wasserstoff, Na, K, Ca, Mg, Ammonium, Mono-, Di-, Tri- oder Tetra-C₁-C₄-alkylammonium, Mono-, Di- oder Tri-C₁-C₄-hydroxyalkylammonium oder Ammonium ist, das mit einer Mischung von C₁-C₄-Alkyl- und C₁-C₄-Hydroxyalkylgruppen di- oder trisubstituiert ist, und
n₁ und n₂ unabhängig voneinander gleich 0 oder 1 sind und
n₃ gleich 1 oder 2 ist.

8. Teilchenförmiges Schaumregulierungsmittel wie in Anspruch 7 beansprucht, wobei Komponente (c) der Formel (2) entspricht, wobei
R₁ gleich -NH-Aryl oder ein Rest der Formel 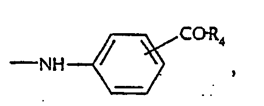 ist, worin R₄ gleich C₁-C₄-Alkyl oder -NR₇R₈ ist, worin R₇ und R₈ gleich Wasserstoff, C₁-C₄-Alkyl sind oder R₇ und R₈ zusammen mit dem Stickstoffatom einen Morpholino- oder Piperidinorest bilden und M gleich Natrium ist, und
R₂ gleich 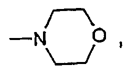 -NH₂, -N(CH₂CH₂OH)₂ oder -N[CH₂CH(OH)CH₃]₂ ist.

9. Teilchenförmiges Schaumregulierungsmittel wie in einem der Ansprüche 1 bis 8 beansprucht, wobei das Bindemittel (Komponente (d)) ein Polycarboxylat ist.

10. Teilchenförmiges Schaumregulierungsmittel wie in Anspruch 9 beansprucht, wobei das Polycarboxylatbindemittel ein Molekulargewicht von nicht mehr als 9000 hat.

11. Teilchenförmiges Schaumregulierungsmittel wie in einem der Ansprüche 1 bis 10 beansprucht, wobei das Polycarboxylatbindemittel (Komponente (d)) auf einen pH von 6,5 oder weniger vor der Herstellung des Schaumregulierungsmittels angesäuert wurde.

12. Reinigungsmittelzusammensetzung in Pulverform, enthaltend 100 Gewichtsteile einer Reinigungsmittelkomponente und eine ausreichende Menge eines teilchenförmigen Schaumregulierungsmittels, das
(a) 1 bis 30 Gewichtsteile eines Siliconantischaummittels,
(b) 45 bis 99 Gewichtsteile eines Zeolithträgerstoffes für das Antischaummittel,
(e) 1 bis 60%, bezogen auf Gewicht des Siliconantischaummittels, eines oberflächenaktiven Mittels, das auf dem Zeolithträgerstoff nicht später als das Silicon abgelagert wurde,
(c) 2 bis 50 Gewichtsteile eines fluoreszierenden Weißmachers und
(d) 1 bis 40 Gewichtsteile eines Polycarboxylatbindemittels oder -einschlussmittels umfasst,
um 0,02 bis 5 Gewichtsteile des Siliconantischaummittels zu ergeben, das in dem Schaumregulierungsmittel enthalten ist.

13. Verfahren zur Herstellung Schaumregulierungsmittels, das das Ablagern von 1 bis 30 Gewichtsteilen eines Siliconantischaummittels und 2 bis 50 Gewichtsteilen eines fluoreszierenden Weißmachers auf 45 bis 99 Gewichtsteile eines Zeolithträgerstoffes umfasst, wobei dieses Siliconantischaummittel und der fluoreszierende Weißmacher gleichzeitig mit oder nach der Ablagerung von 1 bis 60%, bezogen auf Gewicht des Siliconantischaummittels, eines oberflächenaktiven Mittels und 1 bis 40 Gewichtsteilen eines Polycarboxylatbindemittels oder -einschlussmittels abgelagert werden.

## Revendications

1. Agent particulaire de régulation de mousse comprenant
(a) de 1 à 30 parties en poids d'un antimousse de silicone ;
(b) de 45 à 99 parties en poids d'un support particulaire pour l'antimousse ;
(c) de 2 à 50 parties en poids d'un agent blanchissant fluorescent ; et
(d) de 1 à 40 parties en poids d'un liant.

2. Agent particulaire de régulation de mousse selon la revendication 1, dans lequel le constituant (a) est un polymère liquide d'organopolysiloxane et une particule de charge dont la surface a été rendue hydrophobe, l'organopolysiloxane étant un polymère linéaire ou ramifié ayant une structure selon la formule 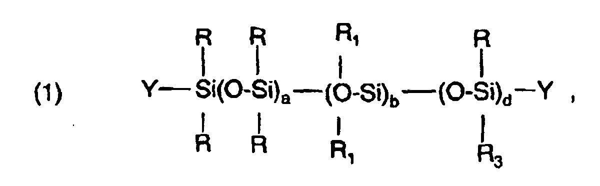 dans laquelle
R indique un groupe hydrocarboné monovalent ayant de 1 à 8 atomes de carbone, de préférence de 1 à 4 atomes de carbone ;
R₁ indique un groupe R ; un groupe hydroxyle ; ou un groupe 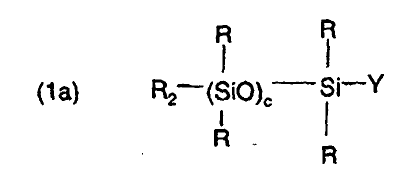 dans laquelle
R₂ indique un groupe hydrocarboné divalent, hydrocarbonoxy ou siloxane ou un atome d'oxygène ;
R₃ indique un groupe alkyle en C₉-C₃₅ ;
Y indique un groupe R ou un groupe hydroxyle;
a, b, c et d présentent une valeur de 0 ou un nombre entier à condition qu'au moins un parmi a et b soit un nombre entier, et le total de a+b+c+d présente une valeur telle que la viscosité du polymère d'organopolysiloxane à 25°C soit d'au moins 50 mm²/s.

3. Agent particulaire de régulation de mousse selon la revendication 1, dans lequel le constituant (a) comprend (A) un matériau d'organopolysiloxane ayant au moins un substituant silicone-lié de la formule X-Ph, dans laquelle X indique un groupe hydrocarboné aliphatique divalent et Ph indique un groupe aromatique facultativement substitué et (B) une résine d'organosilicium et (C) une charge hydrophobe. La résine d'organosilicium (B) est de préférence constituée d'unités siloxane de la formule R'ₐSiO_{4-a/2}, dans laquelle R' indique un groupe hydroxyle, hydrocarboné ou hydrocarbonoxy, particulièrement des unités trialkylsiloxy et des unités SiO_{4/2}, dans lesquelles a présente une valeur de 0,5 à 2,4.

4. Agent particulaire de régulation de mousse selon l'une quelconque des revendications 1 à 3, dans lequel l'agent particulaire de régulation de mousse contient en plus de 1 à 60% en poids de l'antimousse de silicone d'un agent tensioactif (constituant (e)).

5. Agent particulaire de régulation de mousse selon l'une quelconque des revendications 1 à 4, dans lequel le support (constituant (b)) est une zéolite.

6. Agent particulaire de régulation de mousse selon la revendication 5, dans lequel le constituant (b) est une zéolite de type A et présente une formule moyenne (Na₂O)ₘAl₂O₃(SiO₂)ₙ(H₂O)ₜ, dans laquelle m présente une valeur de 0,9 à 1,3, n présente une valeur de 1,3 à 4,0 et t présente une valeur de 1 à 6.

7. Agent particulaire de régulation de mousse selon l'une quelconque des revendications 1 à 6, dans lequel l'agent blanchissant fluorescent (constituant (c)) est choisi parmi les composés des formules 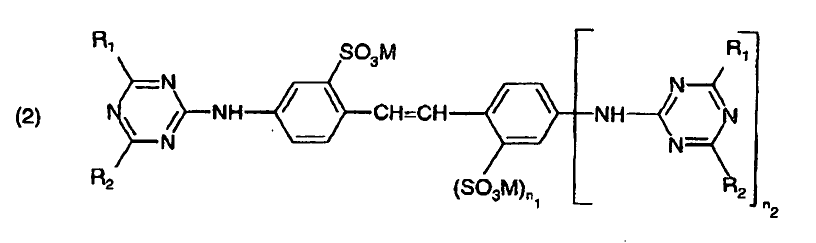 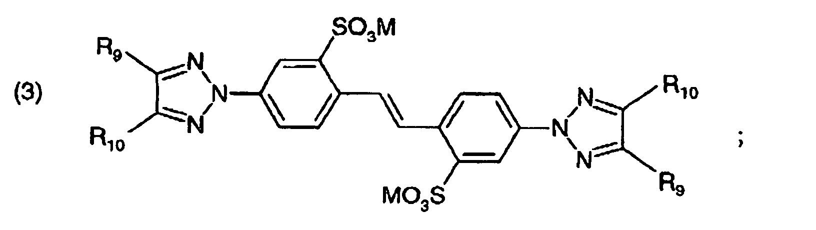 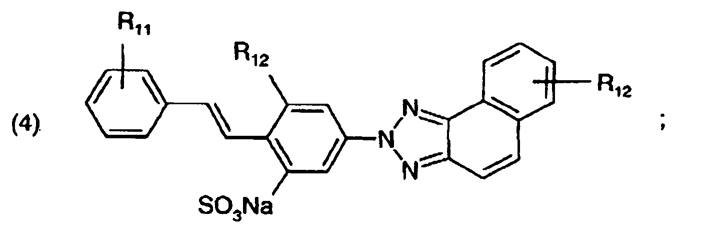 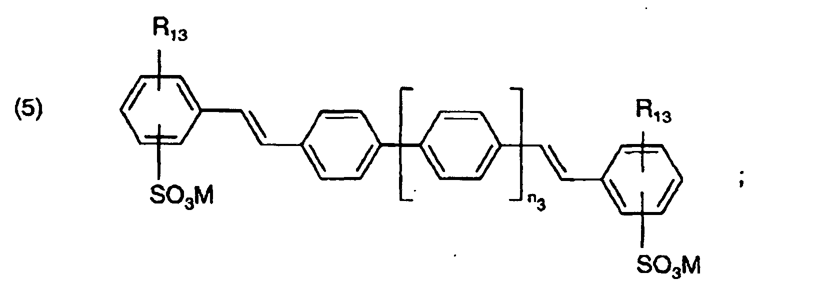 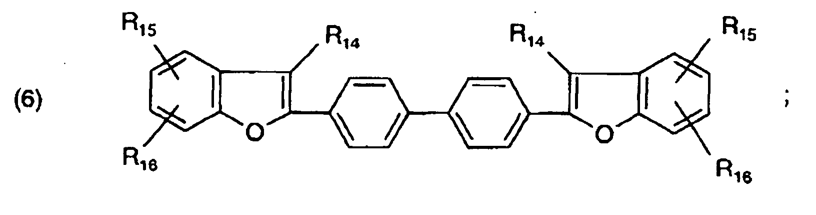 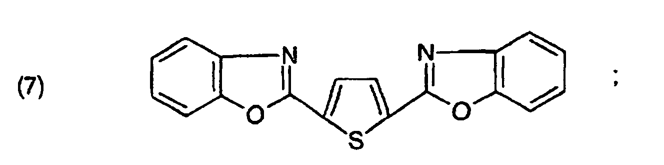 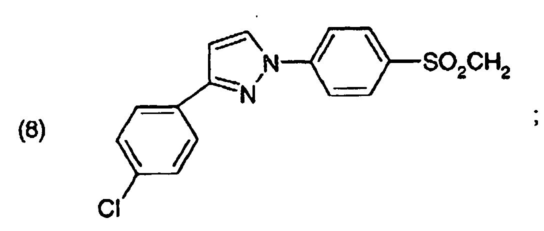 et 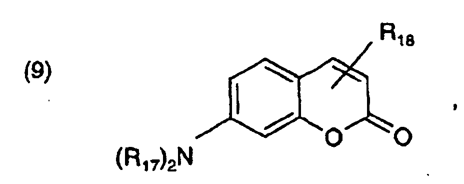 dans lesquelles
R₁ est -OH ; -Cl ; -NH₂ ; -O-(alkyle en C₁-C₄) ; -O-aryle ; -NH-(alkyle en C₁-C₄) ; -N(alkyle en C₁-C₄)₂ ; -N(alkyle en C₁-C₄)(hydroxyalkyle en C₁-C₄) ; -N(hydroxyalkyle en C₁-C₄)₂ ; -NH-aryle ; morpholino ; S-(alkyle en C₁-C₄)(aryle) ; un radical de la formule 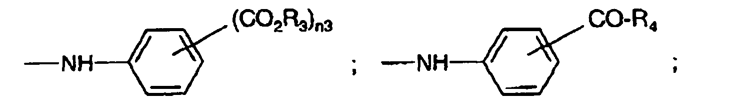 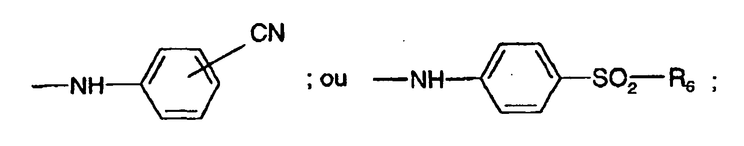
R₂ est un atome d'hydrogène ; un groupe alkyle ou aryle substitué ou non substitué ; -OH ; -Cl ; -NH₂ ; -O-(alkyle en C₁-C₄) ; -O-aryle ; -NH-(alkyle en C₁-C₄) ; -N(alkyle en C₁-C₄)₂ ; -N(alkyle en C₁-C₄)(hydroxyalkyle en C₁-C₄) ; -N(hydroxyalkyle en C₁-C₄)₂ ; -NH-aryle ; un radical de la formule 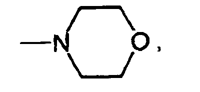 -OH ; -NH₂ ; -N(CH₂CH₂OH)₂ ; -N[CH₂CH(OH)CH₃]₂ ; -NH-R₃ ; -N(R₃)₂ ; ou -OR₃ ;
R₃ est un groupe alkyle ou aryle substitué ou non substitué ; ou M ;
R₄ est un atome d'hydrogène ; un groupe alkyle ou aryle substitué ou non substitué ; ou -NR₇R₈, où R₇ et R₈ sont indépendamment un atome d'hydrogène ; un groupe alkyle ou aryle substitué ou non substitué ; ou R₇ et R₈ sont combinés avec l'atome d'azote les joignant pour former un radical hétérocyclique ;
R₆ est un atome d'hydrogène ; ou un groupe alkyle ou aryle substitué ou non substitué,
R₉ et R₁₀ sont indépendamment un atome d'hydrogène ; un groupe alkyle en C₁-C₄ ; phényle ; ou un radical de la formule 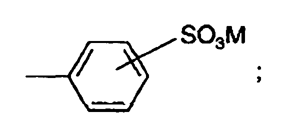
R₁₁ est un atome d'hydrogène ; Cl ; ou SO₃M ;
R₁₂ est -CN ; -SO₃M ; -S(alkyle en C₁-C₄)₂ ou S(aryle)₂ ;
R₁₃ est un atome d'hydrogène ; -SO₃M ; -O-(alkyle en C₁-C₄) ; -CN ; -Cl ; -COO-(alkyle en C₁-C₄) ; ou CON(alkyle en C₁-C₄)₂ ;
R₁₄ est un atome d'hydrogène ; un groupe alkyle en C₁-C₄ ; -Cl ; ou -SO₃M ;
R₁₅ et R₁₆ sont indépendamment un atome d'hydrogène ; un groupe alkyle en C₁-C₄ ; -SO₃M ; -Cl ; ou -O-(alkyle en C₁-C₄) ;
R₁₇ est un atome d'hydrogène ou un groupe alkyle en C₁-C₄ ;
R₁₈ est un atome d'hydrogène ; un groupe alkyle en C₁-C₄ ; -CN ; -Cl ; -COO-(alkyle en C₁-C₄) ; -CON(alkyle en C₁-C₄)₂ ; aryle ; ou -O-aryle ;
M est un atome d'hydrogène ; Na ; K ; Ca ; Mg ; un groupe ammonium ; mono-, di-, tri- ou tétra-(alkyle en C₁-C₄)ammonium ; mono-, di- ou tri-(hydroxyalkyle en C₁-C₄)ammonium ; ou ammonium qui est di- ou trisubstitué avec un mélange de groupes alkyle en C₁-C₄ ou hydroxyalkyle en C₁-C₄ ; et
n₁ et n₂ sont indépendamment égaux à 0 ou à 1 ; et
n₃ est égal à 1 ou à 2.

8. Agent particulaire de régulation de mousse selon la revendication 7, dans lequel le constituant (c) correspond à la formule (2), dans laquelle
R₁ est un groupe -NH-aryle ; ou un radical de la formule 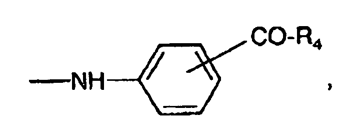 dans laquelle R₄ est un groupe alkyle en C₁-C₄ ; ou -NR₇R₈, où R₇ et R₈ sont un atome d'hydrogène ; un groupe alkyle en C₁-C₄ ; ou R₇ et R₈ forment ensemble avec l'atome N un radical morpholino ou pipéridino ; et M est le sodium ; et
R₂ est 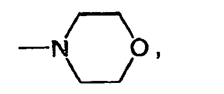 -NH₂, -N(CH₂CH₂OH)₂ ou -N[CH₂CH(OH)CH₃]₂.

9. Agent particulaire de régulation de mousse selon l'une quelconque des revendications 1 à 8, dans lequel le liant (constituant (d)) est un polycarboxylate.

10. Agent particulaire de régulation de mousse selon la revendication 9, dans lequel le liant de polycarboxylate présente un poids moléculaire d'au plus 9 000.

11. Agent particulaire de régulation de mousse selon l'une quelconque des revendications 1 à 10, dans lequel le liant de polycarboxylate (constituant (d)) a été acidifié à un pH de 6,5 ou inférieur avant la préparation de l'agent de régulation de mousse.

12. Composition de détergent dans la forme de poudre comprenant 100 parties en poids d'un constituant de détergent et une quantité suffisante d'un agent particulaire de régulation de mousse comprenant
(a) de 1 à 30 parties en poids d'un antimousse de silicone ;
(b) de 45 à 99 parties en poids d'un support de zéolite pour l'antimousse ;
(e) de 1 à 60 % en poids de l'antimousse de silicone d'un agent tensioactif qui a été déposé sur le support de zéolite avant le silicone ;
(c) de 2 à 50 parties en poids d'un agent blanchissant fluorescent; et
(d) de 1 à 40 parties en poids d'un liant ou d'un encapsulant de polycarboxylate,
pour fournir de 0,02 à 5 parties en poids de l'antimousse de silicone compris dans l'agent de régulation de mousse.

13. Procédé pour la préparation d'un agent de régulation de mousse qui comprend le dépôt de 1 à 30 parties en poids d'un antimousse de silicone et de 2 à 50 parties en poids d'un agent blanchissant fluorescent sur de 45 à 99 parties en poids d'un support de zéolite, lesdits antimousse de silicone et agent blanchissant fluorescent étant déposés ensemble simultanément avec ou après le dépôt de 1 à 60 % en poids de l'antimousse de silicone d'un agent tensioactif et de 1 à 40 parties en poids d'un liant ou d'un encapsulant de polycarboxylate.
